# EUROPEAN PATENT SPECIFICATION

(11) **EP 3 055 437 B1**
(45) Date of publication and mention of the grant of the patent: **12.12.2018**
(21) Application number: 14798963.6
(22) Date of filing: 07.10.2014
(51) Int. Cl.: C22B 7/00

(54) **HYDROMETALLURGY PROCESS FOR THE RECOVERY OF MATERIALS FROM ELECTRONIC BOARDS**
HYDROMETALLURGISCHES VERFAHREN ZUR RÜCKGEWINNUNG VON WERTSTOFFEN AUS ELEKTRONISCHEN KARTEN
PROCÉDÉ HYDROMÉTALLURGIQUE POUR LA RÉCUPÉRATION DE MATÉRIAUX À PARTIR DE CARTES ÉLECTRONIQUES

(30) Priority: 07.10.2013 IT RM20130549
(43) Date of publication of application: 17.08.2016
(73) Proprietor: Agenzia Nazionale Per Le Nuove Tecnologie, L'Energia E Lo Sviluppo Economico Sostenibile (ENEA), Roma (IT)
(72) Inventor: BRUNORI, Claudia, I-00198 Roma (IT); FONTANA, Danilo, I-00198 Roma (IT); DE CAROLIS, Roberta, I-00198 Roma (IT); PIETRANTONIO, Massimiliana, I-00198 Roma (IT); PUCCIARMATI, Stefano, I-00198 Roma (IT); GUZZINATI, Roberta, I-00198 Roma (IT); TORELLI, Giorgia Nadia, I-00198 Roma (IT)
(74) Representative: Bosman, Cesare
(86) International application number: PCT/IB2014/065131
(87) International publication number: WO 2015/052658

(56) References cited:
- US-A- 4 426 225
- HAIYU YANG ET AL: "Leaching copper from shredded particles of waste printed circuit boards", JOURNAL OF HAZARDOUS MATERIALS, ELSEVIER, AMSTERDAM, NL, vol. 187, no. 1, 11 January 2011 (2011-01-11), pages 393-400, XP028153114, ISSN: 0304-3894, DOI: 10.1016/J.JHAZMAT.2011.01.051 [retrieved on 2011-01-18]
- ANDREA MECUCCI AND KEITH SCOTT: "Leaching and electrochemical recovery of copper, lead and tin from scrap printed circuit boards", JOURNAL OF CHEMICAL TECHNOLOGY AND BIOTECHNOLOGY, JOHN WILEY & SONS LTD, UNITED KINGDOM, vol. 77, no. 4, 1 April 2002 (2002-04-01), pages 449-457, XP001577446, ISSN: 0268-2575, DOI: 10.1002/JCTB.575 [retrieved on 2002-02-08]
- YANHUA ZHANG ET AL: "Current Status on Leaching Precious Metals from Waste Printed Circuit Boards", PROCEDIA ENVIRONMENTAL SCIENCES, vol. 16, 1 January 2012 (2012-01-01), pages 560-568, XP055121350, ISSN: 1878-0296, DOI: 10.1016/j.proenv.2012.10.077

## Description

### TECHNICAL FIELD

The present invention concerns a hydrometallurgy process for the recovery of materials from electronic boards.

### BACKGROUND ART

The recovery of materials from waste electrical and electronic equipment (WEEE) represents a great opportunity in terms of both the high value of some of these materials and their re-use in components and products characteristic of the advanced economies (electric cars, flat-screen televisions, mobile phones, magnets, batteries, fuel cells, catalytic converters, some types of solar cells).

The demand for these materials over the last few years has seen a sharp increase and has led to a critical situation in supply availability, consequently resulting in price increases.

For a correct evaluation of the above, it must be added that waste electrical and electronic equipment has a growth rate of 3-5% per year and that according to the European Waste Catalogue (EWS), WEEE must be considered hazardous for the environment since it contains heavy metals and halogenated organic compounds.

The study of technologies for the recovery of raw materials from discarded electronic devices is therefore of great interest, in terms of both suggesting an alternative to disposal in land-fills or incinerators, thus preventing consequent pollution, and developing a selective recovery process of the metals having a high commercial value, also in relation to the possibility of exploiting them as alternative resources.

Electronic boards constitute on average 10% by weight of a PC, comprising mother board, RAM and CPU. Each board can contain up to 60 elements of the periodic table including a substantial proportion of noble and strategic metals like Pt, Ag, Au, in addition to metals with a high commercial value like Cu and Sn.

The recovery of metals and materials from electronic boards generally entails mechanical pre-treatment of the boards (grinding) and is performed with physical, gravimetric and/or electromagnetic methods, pyrometallurgical, hydrometallurgical and biometallurgical processes.

Pyrometallurgical processes at high temperature (around 1200°C) require huge investments and involve significant environmental problems due to emissions into the atmosphere. Hydrometallurgical techniques, on the other hand, are generally performed at temperatures close to ambient temperature, with lower costs and limited atmospheric emissions.

Furthermore, the need for mechanical pre-treatment of the boards represents a complication both in terms of preparation of the sample and the subsequent hydrometallurgical process, to the extent that it is often necessary to design machinery able to crush the waste into suitable dimensions.

Generally, gold is separated via a sequence of steps necessary for achieving a high purity level. The obtaining of gold and noble metals in general is the subject of various studies in the sector, and a part of the patent literature describes extraction processes conducted with the help of a complexing molecule synthesised for the purpose.

Haiyu Yang et al ("Leaching copper from shredded particles of waste printed circuit boards", JOURNAL OF HAZARDOUS MATERIALS, ELSEVIER AMSTERDAM, NL, vol. 187, no. 1, 11 January 2011 (2011-01-11), pages 393-400, XP028153114, ISSN: 0304-3894, DOI: 10.1016/J.JHAZMAT.2011.01.051) discloses a process for treating waste printed circuit boards (PCB) containing a pre-treatment step comprising immersing the waste PCB in diluted nitric acid and stannic acid was recovered from the leaching solution. The concentration of the nitric acid used for preparation of waste PCBs is about 2mol/L and the PCBs were immersed for about 3h at room temperature so almost non coper was leached. The treated PCBs were shredded for further treatment.

The Applicant has devised a hydrometallurgical process for the recovery of materials from electronic boards. The main advantages of this process are that it does not require any grinding pre-treatment and is therefore performed on the whole electronic boards, and it guarantees simple direct recovery of the metallic gold and the stannic oxide and/or stannic acid following a first leaching step.

### DISCLOSURE OF INVENTION

The subject of the present invention is a hydrometallurgical process for the recovery of materials from electronic boards, the essential characteristics of which are reported in claim 1, and the preferred and/or auxiliary characteristics of which are reported in claims 2-9.

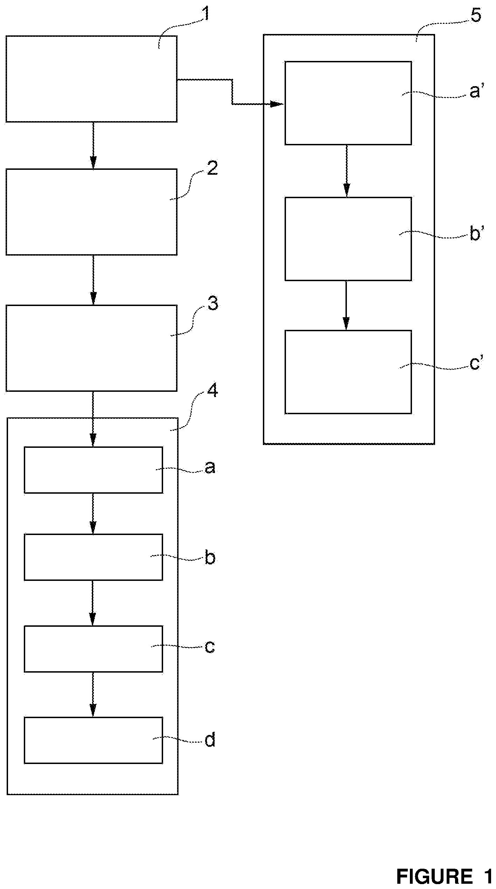

### BRIEF DESCRIPTION OF THE DRAWING

An embodiment example is given below for purely illustrative nonlimiting purposes with the help of the attached figure which is a block diagram of the process subject of the present invention.

### BEST MODE FOR CARRYING OUT THE INVENTION

### EXAMPLE

### LEACHING (1)

An electronic board as is was immersed for 4h in a leaching solution of HNO₃ at 30% by weight with a solid/liquid ratio of 1:3, and then removed.

The purpose of this leaching stage is to remove the weldings, dissolve the metals, precipitate the stannic oxide and/or stannic acid and detach the gold in metallic form from the circuits.
Alternatively to the above, the leaching solution, in addition to the nitric acid, can also contain a peroxide compound, preferably hydrogen peroxide.

### VIBRATING SIEVING (2)

Here and below, by the term vibrating sieving we mean a solid/liquid and solid/solid separation operation by means of vibrating sieves, based on the different sizes of the component parts of the solid. The sieves, provided with holes of suitable diameter and arranged in series, separate the materials by "piece size".

At the end of the 4 h of the leaching stage, the leached was subject to a vibrating sieving stage. The leached was passed through a vibrating sieve comprising 4 sieves with holes of decreasing size (10 mm; 5 mm; 0.4 mm; 0.03 mm), which retain solids with progressively smaller size.

The fractions recovered at this stage are (in order of decreasing size):
- unwelded components of different nature (slots, capacitors etc.)
- gold in metallic form in the presence of plastic materials and fibreglass of the same size, to be mechanically separated.
In this way, directly from the combination of treatment with the HNO₃ solution and a vibrating sieving stage, metallic gold was recovered in a distinct form and conditions were obtained allowing separation of the stannic oxide and/or stannic acid by means of physical methods.

The common recovery of the stannic oxide and stannic acid is due to the fact that, as known to a person skilled in the art, stannic oxide is in equilibrium with stannic acid as a function of its hydration.

### SEPARATION OF STANNIC OXIDE AND/OR STANNIC ACID (3)

The leached resulting from the vibrating sieve is subject to a physical separation stage to recover the stannic oxide and/or stannic acid. In particular, the stannic oxide and/or stannic acid is separated by means of a decantation and/or filtration operation.

### FRACTIONAL PRECIPITATION (4)

The leached resulting from the stannic oxide and/or stannic acid separation was treated with the addition of chemical reagents to cause a series of fractional precipitations. This stage comprised the following operations:
a) 400 cc of H₂SO₄ at 96% by weight per litre or, alternatively, 100 g of Na₂SO₄ per litre, were added to the leaching, causing the precipitation of PbSO₄;
b) addition of 0.4 g of NaCl per litre of solution resulting from operation (a), causing the precipitation of AgCl;
c) addition of NaOH to the solution resulting from operation (b) in a quantity sufficient to reach a pH of 2.80, causing the precipitation of Fe(OH)₃;
d) addition of NaOH to the solution resulting from operation (c) in a quantity sufficient to reach a pH equal to 5.30, causing the precipitation of CuO or Cu(OH)₂ depending on whether H₂SO₄ or Na₂SO₄ were used respectively in operation (a).

In each of the operations (a)-(d) the precipitates were recovered by filtration.

In this fractional precipitation stage it is possible to intervene on the pH value of the individual operations to satisfy the degree of purity required for the individual products.

The AgCl recovered by the operation (b) was subject to chemical reduction, dissolving the precipitate in 20 cc of NaOH at 50% by weight per gram of AgCl and for each ml of the solution obtained, 35 mg of glucose were added. In this way the metallic Ag was obtained.

The Cu(OH)₂ or the CuO obtained as precipitate from the operation (d) was re-dissolved in a solution of H₂SO₄ at 50% by weight (1 mL for every g of precipitate), and the copper was obtained in metallic form by means of subsequent electrodeposition.

### RESIDUAL BOARD TREATMENT(5)

The residual board resulting from the leaching stage is subject to a treatment stage for the recovery of metallic Cu.

This treatment stage comprises the following operations:
a') after washing, the residual board was ground into fragments of dimensions 4x4 mm;
b') the ground board was immersed for 4 h in a solution of HNO₃ at 30% by weight with a solid/liquid ratio of 1:3;
c') a quantity of NaOH sufficient to reach pH of 5.30 was added to the leachedresulting from operation (b'), causing the precipitation of Cu(OH)₂.

As described above, the precipitated Cu(OH)₂ is re-dissolved in a solution of H₂SO₄ at 50% by weight (1 mL for every g of precipitate), and by means of subsequent electrodeposition the copper was obtained in metallic form.

From the above description, it can be immediately seen that the process of the present invention is able to guarantee simple efficient recovery of the metals in the electronic boards, without subjecting the same to grinding pre-treatment, which necessarily involves advantages in both production and process terms.

Furthermore, the process subject of the present invention guarantees an immediate recovery of the gold following the sole combination in series of treatment of the whole board with a solution of HNO₃ in given conditions and vibrating sieving of the leaching, and recovery of the stannic oxide and/or stannic acid following a subsequent physical separation.

Furthermore, the process of the present invention offers the advantage of being able to intervene in the recovery conditions of the metals to obtain the latter with the desired degree of purity.

Lastly, the process of the present invention has the great advantage of not suffering from application limitations according to the metals present in the electronic boards. In fact, the process of the present invention can also be performed on electronic boards containing materials such as lead, which can often be an obstacle to the effectiveness of hydrometallurgical processes for the recovery of metals from electronic boards.

## Claims

1. A hydrometallurgy process for the recovery of materials from electronic boards comprising at least one leaching step (1) and one fractional precipitation step (4) to be performed on the solution resulting from the leaching step; wherein during said leaching step, the entire electronic board is immersed, for an amount of time ranging from 15 m to 48 h, in a leaching solution comprising HNO₃ at a concentration that is higher than or equal to 20% by weight and with a solid/liquid ratio that is lower than or equal to 1; and the process comprises a vibrating sieving step (2), in which the HNO₃ solution resulting from the leaching step (1) is caused to flow through at least one first sieve having holes with a size ranging from 10 to 3 mm, in order to recover the unwelded components of different nature, and through at least one second sieve having holes with a size ranging from 0.5 to 0.01 mm, in order to recover metal Au; and a stannic oxide and/or stannic acid separation step (3), in which the leached resulting from the vibrating sieving step (2) is subject to a physical separation operation for the recovery of stannic oxide and/or stannic acid.

2. A hydrometallurgy process according to claim 1, **characterised in that**, during said leaching step, said HNO₃ solution is at a concentration ranging from 25 to 35% by weight and is used with a solid/liquid ratio ranging from 1:1 to 1:4.

3. A hydrometallurgy process according to claim 2, **characterised in that** said HNO₃ solution is used with a solid/liquid ratio ranging from 1:2 to 1:3.

4. A hydrometallurgy process according to any of the previous claims, **characterised in that**, during said leaching step (1), the leaching solution also comprises, besides HNO₃, a peroxide compound.

5. A hydrometallurgy process according to claim 4, **characterised in that** said peroxide compound is hydrogen peroxide.

6. A hydrometallurgy process according to any of the previous claims, **characterised in that** said stannic oxide and/or stannic acid physical separation step (3) comprises a filtration operation and/or a decantation operation.

7. A hydrometallurgy process according to any of the previous claims, **characterised in that** the vibrating sieving step (2) involves a three-dimensional oscillating and/or linear and/or circular and horizontal and/or sussultatory-rotating vibration.

8. A hydrometallurgy process according to any of the previous claims, **characterised in that** said fractional precipitation step comprises, in sequence, a first operation (a), in which H₂SO₄ or, alternatively, Na₂SO₄ is added to the leached resulting from the stannic oxide and/or stannic acid separation step (3), thus causing the precipitation of PbSO₄; a second operation (b), in which NaCl is added to the solution resulting from operation (a), thus causing the precipitation of AgCl; a third operation (c), in which OH⁻ in a quantity that is sufficient to reach a pH ranging from 2.0 to 3.0 is added to the solution resulting from operation (b), thus causing the precipitation of Fe(OH)₃; a fourth operation (d), in which OH⁻ in a quantity that is sufficient to reach a pH ranging from 3.2 to 6.0 is added to the solution resulting from operation (c), thus causing the precipitation of CuO or Cu(OH)₂.

9. A hydrometallurgy process according to any of the previous claims, **characterised in that** it comprises a residual board treatment step (5) for the treatment of the residual boards resulting from the leaching step (1); said residual board treatment step (5) comprising, in sequence, a first operation (a'), in which the residual board resulting from the leaching step, after having been washed, is ground so as to obtain fragments with a size smaller than 5x5 mm; a second operation (b'), in which the ground board is immersed, for an amount of time smaller than 48 hours, in HNO₃ solution at a concentration that is higher than or equal to 20% by weight and with a solid/liquid ratio that is lower than or equal to 1; a third operation (c'), in which a quantity of OH⁻ that is sufficient to reach a pH ranging from 3.0 to 12.0 is added to the HNO₃ solution resulting from operation (b'), thus causing the precipitation of Cu(OH)₂.

## Patentansprüche

1. Nassmetallurgisches Verfahren zur Gewinnung von Materialien von elektronischen Leiterplatten, umfassend mindestens einen Laugungsschritt (1) und einen Fraktionierungsfällungsschritt (4), der an der aus dem Laugungsschritt entstehenden Lösung auszuführen ist; wobei während des Laugungsschritts die gesamte elektronische Leiterplatte über einen Zeitraum im Bereich von 15 min bis 48 h in eine Laugungslösung eingetaucht wird, die HNO₃ in einer Konzentration enthält, die höher als oder gleich 20 Gew.-% ist, und mit einem Flüssig/Fest-Verhältnis aufweist, das niedriger als oder gleich 1 ist; und wobei das Verfahren einen Schwingsiebungsschritt (2) umfasst, in dem bewirkt wird, dass die aus dem Laugungsschritt (1) entstehende HNO₃-Lösung durch mindestens ein erstes Sieb mit Löchern von einer Größe im Bereich von 10 bis 3 mm, um die nicht verlöteten Komponenten verschiedener Art zu gewinnen, und durch mindestens ein zweites Sieb mit Löchern von einer Größe im Bereich von 0,5 bis 0,01 mm strömt, um metallisches Au zu gewinnen; und einen Zinnoxid- und/oder Zinnsäure-Abtrennungsschritt (3), in dem die aus dem Schwingsiebungsschritt (2) entstehende Laugung einem physikalischen Trennvorgang zur Gewinnung von Zinnoxid und/oder Zinnsäure unterzogen wird.

2. Nassmetallurgisches Verfahren nach Anspruch 1, **dadurch gekennzeichnet, dass** während des Laugungsschritts die HNO₃-Lösung in einer Konzentration im Bereich von 25 bis 35 Gew.-% vorliegt und mit einem Flüssig/Fest-Verhältnis im Bereich von 1:1 bis 1:4 verwendet wird.

3. Nassmetallurgisches Verfahren nach Anspruch 2, **dadurch gekennzeichnet, dass** die HNO₃-Lösung mit einem Flüssig/Fest-Verhältnis im Bereich von 1:2 bis 1:3 verwendet wird.

4. Nassmetallurgisches Verfahren nach einem der vorhergehenden Ansprüche, **dadurch gekennzeichnet, dass** während des Laugungsschritts (1) die Laugungslösung neben HNO₃ auch eine Peroxidverbindung enthält.

5. Nassmetallurgisches Verfahren nach Anspruch 4, **dadurch gekennzeichnet, dass** die Peroxidverbindung Wasserstoffperoxid ist.

6. Nassmetallurgisches Verfahren nach einem der vorhergehenden Ansprüche, **dadurch gekennzeichnet, dass** der physikalische Zinnoxid- und/oder Zinnsäure-Abtrennungsschritt (3) einen Filtriervorgang und/oder einen Dekantiervorgang umfasst.

7. Nassmetallurgisches Verfahren nach einem der vorhergehenden Ansprüche, **dadurch gekennzeichnet, dass** der Schwingsiebungsschritt (2) eine dreidimensionale oszillierende und/oder lineare und/oder kreisförmige und horizontale und/oder Rüttel-Dreh-Schwingung umfasst.

8. Nassmetallurgisches Verfahren nach einem der vorhergehenden Ansprüche, **dadurch gekennzeichnet, dass** der Fraktionierungsfällungsschritt nacheinander folgende Vorgänge umfasst: einen ersten Vorgang (a), bei dem H₂SO₄ oder alternativ Na₂SO₄ der aus dem Zinnoxid- und/oder Zinnsäure-Abtrennungsschritt (3) entstehenden Laugung zugefügt wird, womit die Ausfällung von PbSO₄ bewirkt wird; einen zweiten Vorgang (b), bei dem NaCl der aus dem Vorgang
(a) entstehenden Lösung zugefügt wird, womit die Ausfällung von AgCl bewirkt wird; einen dritten Vorgang (c), bei dem OH⁻ in einer Menge, die ausreichend ist, um einen pH im Bereich von 2,0 bis 3,0 zu erreichen, der aus dem Vorgang
(b) entstehenden Lösung zugefügt wird, womit die Ausfällung von Fe(OH)₃ bewirkt wird; einen vierten Vorgang (d), bei dem OH⁻ in einer Menge, die ausreichend ist, um einen pH im Bereich von 3,2 bis 6,0 zu erreichen, der aus dem Vorgang
(c) entstehenden Lösung zugefügt wird, womit die Ausfällung von CuO oder Cu(OH)₂ bewirkt wird.

9. Nassmetallurgisches Verfahren nach einem der vorhergehenden Ansprüche, **dadurch gekennzeichnet, dass** es einen Behandlungsschritt (5) der restlichen Leiterplatten für die Behandlung der aus dem Laugungsschritt (1) entstehenden restlichen Leiterplatten umfasst; wobei der Behandlungsschritt (5) der restlichen Leiterplatten nacheinander folgende Vorgänge umfasst: einen ersten Vorgang (a'), bei dem die aus dem Laugungsschritt entstehende restliche Leiterplatte, nachdem sie gewaschen wurde, zerkleinert wird, um Fragmente von einer Größe kleiner als 5 x 5 mm zu erhalten; einen zweiten Vorgang (b'), bei dem die zerkleinerte Leiterplatte über einen Zeitraum kleiner als 48 Stunden in eine HNO₃-Lösung mit einer Konzentration, die höher als oder gleich 20 Gew.-% ist, und mit einem Flüssig/Fest-Verhältnis, das niedriger als oder gleich 1 ist, eingetauscht wird; einen dritten Vorgang (c'), bei dem eine Menge von OH⁻, die ausreichend ist, um einen pH im Bereich von 3,0 bis 12,0 zu erreichen, der aus dem Vorgang (b') entstehenden HNO₃-Lösung zugefügt wird, womit die Ausfällung von Cu(OH)₂ bewirkt wird.

## Revendications

1. Procédé d'hydrométallurgie pour la récupération de matériaux à partir de cartes électroniques comprenant au moins une étape de lixiviation (1) et au moins une étape de précipitation fractionnée (4) à mettre en oeuvre sur la solution résultant de l'étape de lixiviation ; dans lequel pendant ladite étape de lixiviation, toute la carte électronique est immergée, pendant une durée allant de 15 min à 48 h, dans une solution de lixiviation comprenant du HNO₃ en une concentration qui est supérieure ou égale à 20 % en poids et avec un rapport solide/liquide qui est inférieur ou égal à 1 ; et le procédé comprenant une étape de tamisage sur tamis vibrant (2), dans laquelle la solution de HNO₃ résultant de l'étape de lixiviation (1) est amenée à passer dans au moins un premier tamis ayant des trous présentant une taille allant de 10 à 3 mm, afin de récupérer les composants non soudés de nature différente, et dans au moins un second tamis ayant des trous présentant une taille allant de 0,5 à 0,01 mm, afin de récupérer l'Au métallique ; et une étape de séparation d'oxyde stannique et/ou d'acide stannique (3), dans laquelle le lixiviat résultant de l'étape de tamisage sur tamis vibrant (2) est soumis à une opération de séparation physique pour la récupération d'oxyde stannique et/ou d'acide stannique.

2. Procédé d'hydrométallurgie selon la revendication 1, **caractérisé en ce que**, pendant ladite étape de lixiviation, ladite solution de HNO₃ est à une concentration allant de 25 à 35 % en poids et est utilisée avec un rapport solide/liquide allant de 1:1 à 1:4.

3. Procédé d'hydrométallurgie selon la revendication 2, **caractérisé en ce que** ladite solution de HNO₃ est utilisée avec un rapport solide/liquide allant de 1:2 à 1:3.

4. Procédé d'hydrométallurgie selon l'une quelconque des revendications précédentes, **caractérisé en ce que**, pendant ladite étape de lixiviation (1), la solution de lixiviation comprend également, outre HNO₃, un composé peroxyde.

5. Procédé d'hydrométallurgie selon la revendication 4, **caractérisé en ce que** ledit composé peroxyde est le peroxyde d'hydrogène.

6. Procédé d'hydrométallurgie selon l'une quelconque des revendications précédentes, **caractérisé en ce que** ladite étape de séparation physique d'oxyde stannique et/ou d'acide stannique (3) comprend une opération de filtration et/ou une opération de décantation.

7. Procédé d'hydrométallurgie selon l'une quelconque des revendications précédentes, **caractérisé en ce que** l'étape de tamisage sur tamis vibrant (2) comporte une vibration oscillante tridimensionnelle et/ou linéaire et/ou circulaire et horizontale et/ou sussultatoire-rotative.

8. Procédé d'hydrométallurgie selon l'une quelconque des revendications précédentes, **caractérisé en ce que** ladite étape de précipitation fractionnée comprend, dans l'ordre, une première opération (a), dans laquelle du H₂SO₄ ou, en variante, du Na₂SO₄, est ajouté au lixiviat résultant de l'étape de séparation d'oxyde stannique et/ou d'acide stannique (3), ce qui provoque ainsi la précipitation de PbSO₄ ; une deuxième opération (b), dans laquelle du NaCl est ajouté à la solution résultant de l'opération (a), ce qui provoque ainsi la précipitation d'AgCl ; une troisième opération (c), dans laquelle des OH⁻ en une quantité qui est suffisante pour atteindre un pH allant de 2,0 à 3,0 sont ajoutés à la solution résultant de l'opération (b), ce qui provoque ainsi la précipitation de Fe(OH)₃ ; une quatrième opération (d), dans laquelle des OH⁻ en une quantité qui est suffisante pour atteindre un pH allant de 3,2 à 6,0 sont ajoutés à la solution résultant de l'opération (c), ce qui provoque ainsi la précipitation de CuO ou de Cu(OH)₂.

9. Procédé d'hydrométallurgie selon l'une quelconque des revendications précédentes, **caractérisé en ce qu'**il comprend une étape de traitement de cartes résiduelles (5) pour le traitement des cartes résiduelles résultant de l'étape de lixiviation (1) ; ladite étape de traitement de cartes résiduelles (5) comprenant, dans l'ordre, une première opération (a'), dans laquelle la carte résiduelle résultant de l'étape de lixiviation, après avoir été lavée, est broyée de manière à obtenir des fragments présentant une taille plus petite que 5x5 mm ; une deuxième opération (b'), dans laquelle la carte broyée est immergée, pendant une durée inférieure à 48 heures, dans de la solution de HNO₃ à une concentration qui est supérieure ou égale à 20 % en poids et avec un rapport solide/liquide qui est inférieur ou égal à 1 ; une troisième opération (c'), dans laquelle une quantité de OH⁻ qui est suffisante pour atteindre un pH de 3,0 à 12,0 est ajoutée à la solution de HNO₃ résultant de l'opération (b'), ce qui provoque ainsi la précipitation de Cu(OH)₂.
